# EUROPEAN PATENT APPLICATION

(11) **EP 3 188 095 A1**
(43) Date of publication of application: **05.07.2017**
(21) Application number: 16000461.0
(22) Date of filing: 25.02.2016
(51) Int. Cl.: G06Q 10/06, G06Q 10/00, G06Q 20/20

(54) **SYSTEM FOR DISPLAYING AND PROMPTING LIFE PERCENTAGE OF ELECTRONIC DEVICE**

(30) Priority: 29.12.2015 TW 104144276
(71) Applicant: Flytech Technology Co., Ltd., Taipei City 114 (TW)
(72) Inventor: LAM, Tai-Seng, 114 Taipei City (TW); LIN, Chiung-Chi, 114 Taipei City (TW)
(74) Representative: Zeitler Volpert Kandlbinder Patent- und Rechtsanwälte Partnerschaft mbB

(57) **Abstract**

A system for displaying and prompting a life percentage of an electronic device is provided. The system includes the electronic device and an intelligent device installed in the electronic device. The intelligent device includes a signal transmission module, a processing unit, a storage module and a prompt displaying module. The signal transmission module is electrically connected with the electronic device for receiving the history data. The processing unit generates a life percentage value according to the history data of the electronic device, and generates a life percentage status signal according to the life percentage value. The storage module stores the history data. The prompt displaying module receives and displays the life percentage status signal. A user judges whether the electronic device is replaced with a new one according to the life percentage status signal.

## Description

### FIELD OF THE INVENTION

The present invention relates to a displaying and prompting system, and more particularly to a system for displaying and prompting a life percentage of an electronic device.

### BACKGROUND OF THE INVENTION

With the popularity of the selling system in business, electronic devices of a point-of-sale (POS) system are used in various stores or business to manage goods purchase, goods sale, good return, fees and other information. For example, electronic devices of the POS system include a host, a monitor, a printer, and so on. When the electronic device needs to be replaced, the user has to notify the engineer of the original factory to replace the components of the electronic device.

Generally, the user has to make an appointment with the maintenance engineer to acquire the maintenance service. Consequently, the problems of the electronic device cannot be solved immediately. In other words, the conventional technology is not user-friendly. For example, the electronic device for the POS system is an important business tool in the store or the business place. The electronic device for the POS system is used to calculate the number or items of the business products and gather statistics about the turnover and other data in the same day. If the electronic device is abnormal and the abnormal situation fails to be eliminated in advance or immediately, the selling process is not smooth. Under this circumstance, the operating loss in business increases.

### SUMMARY OF THE INVENTION

For solving the drawbacks of the conventional technologies, the present invention provides a system for displaying and prompting a life percentage of an electronic device.

In accordance with an aspect of the present invention, there is provided a system for displaying and prompting a life percentage of an electronic device. The system includes the electronic device and an intelligent device. The electronic device generates a history data. The intelligent device is installed in the electronic device. The intelligent device includes a signal transmission module, a processing unit, a storage module and a prompt displaying module. The signal transmission module is electrically connected with the electronic device, and receives the history data. The processing unit generates a life percentage value according to the history data of the electronic device, and generates a life percentage status signal according to the life percentage value. The storage module stores the history data. The prompt displaying module receives and displays the life percentage status signal. A user judges whether the electronic device is replaced with a new one according to the life percentage status signal.

In an embodiment, the history data contains a product serial number, a maintenance record, an operating temperature, a usage time and at least one setting parameter of the electronic device.

In an embodiment, the life percentage value is an equivalent usage time that is calculated according to at least a portion of the history data of the electronic device. The processing unit generates the life percentage status signal according to the equivalent usage time.

In an embodiment, the electronic device is a host, a monitor, a printer, a hard disk drive or a peripheral device of a point-of-sale system.

In an embodiment, the history data is actively read and stored by the intelligent device at regular time.

In an embodiment, after the history data of the electronic device is updated, the history data in the storage module is immediately updated by the processing unit of the intelligent device.

In an embodiment, the intelligent device further includes a wireless transmission module, and the wireless transmission module is in wireless connection with a mobile device. When a read signal from the mobile device is received by the intelligent device, the life percentage status signal is transmitted from the intelligent device to the mobile device through the wireless transmission module, so that the life percentage of the electronic device is shown on the mobile device.

In an embodiment, the wireless transmission module is in wireless connection with the mobile device through a wireless Bluetooth connection, a wireless mesh network connection or a wireless WiFi network connection.

In an embodiment, the prompt displaying module includes at least one light emitting diode, a thin film transistor liquid crystal display or a liquid crystal display module.

In an embodiment, the prompt displaying module includes plural light emitting diodes. A specified number of the plural light emitting diodes are turned on according to a spent equivalent usage time corresponding to the life percentage status signal or a residual equivalent usage time corresponding to the life percentage status signal.

In an embodiment, the prompt displaying module includes plural light emitting diodes with different colors, and the plural light emitting diodes are selectively turned on according to the life percentage status signal.

In an embodiment, the electronic device includes a first power providing unit that provides electricity to the electronic device, and the intelligent device further includes a second power providing unit that provides electricity to the intelligent device. The first power providing unit and the second power providing unit are independent from each other.

In an embodiment, the mobile device is a smart phone, a tablet computer or a notebook computer.

From the above descriptions, the present invention provides a system for displaying and prompting a life percentage of an electronic device. An intelligent device is used for reading a history data of the electronic device and calculating a life percentage value corresponding to the electronic device according to the history data. Moreover, the intelligent device generates a life percentage status signal according to the life percentage value, and displays the life percentage of the electronic device through a prompt displaying module. Consequently, the life percentage of the electronic device can be realized by the user. In practice, the system is further equipped with a mobile device. When an application program in the mobile device is executed, the life percentage status signal of the corresponding electronic device is read by the mobile device at a near side. Moreover, the life percentage of the electronic device is clearly shown on a user interface. Consequently, the system of the present invention can facilitate the user to realize the life percentage of the electronic device and facilitate the user to judge whether the electronic device needs to be replaced with a new one.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the architecture of a system for displaying and prompting a life percentage of an electronic device according to an embodiment of the present invention; and
FIG. 2 is a schematic functional block diagram illustrating the displaying and prompting system of FIG. 1.

### DETAILED DESCRIPTION OF THE PREFERRED EMBODIMENT

The present invention will now be described more specifically with reference to the following embodiments and accompanying drawings.

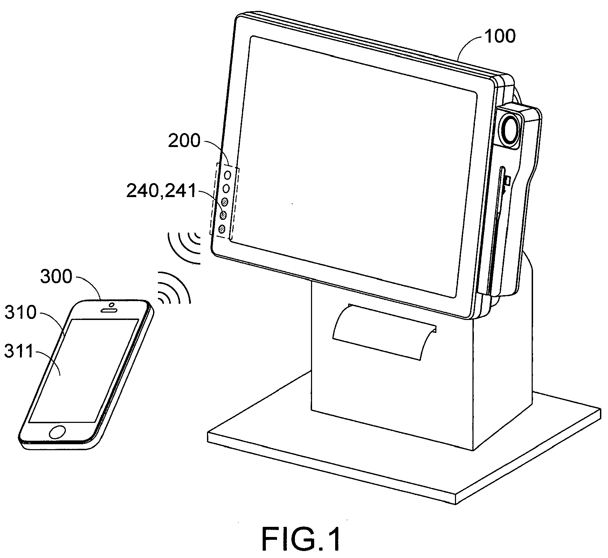

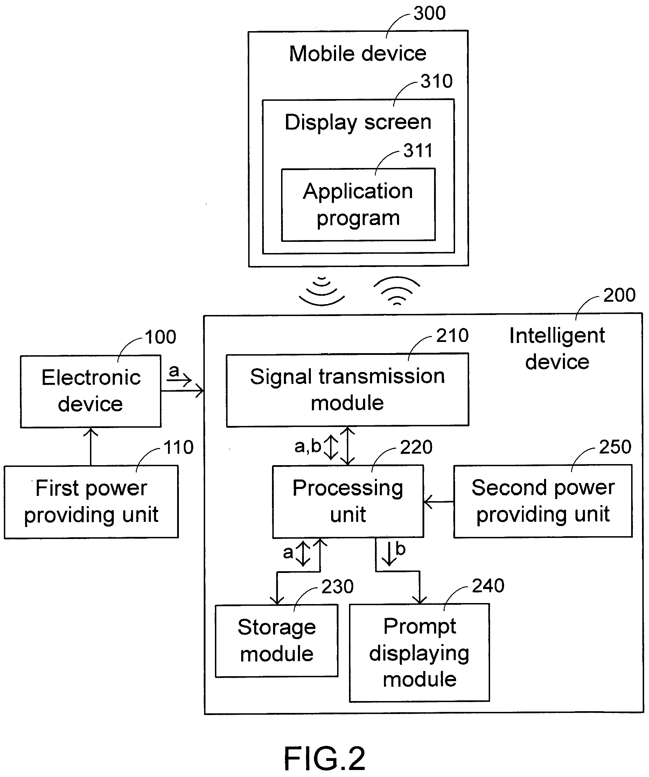

FIG. 1 schematically illustrates the architecture of a system for displaying and prompting a life percentage of an electronic device according to an embodiment of the present invention. FIG. 2 is a schematic functional block diagram illustrating the displaying and prompting system of FIG. 1.

As shown in FIGS. 1 and 2, the system comprises an electronic device 100, an intelligent device 200 and a mobile device 300. The intelligent device 200 comprises a signal transmission module 210, a processing unit 220, a storage module 230, a prompt displaying module 240 and a second power providing unit 250, which are in communication with each other. The electronic device 100 comprises a first power providing unit 110. The intelligent device 200 further comprises a wireless transmission module (not shown). The intelligent device 200 is in wireless connection with the mobile device 300 through the wireless transmission module.

The system as shown in FIGS. 1 and 2 is used for displaying and prompting a life percentage of the electronic device 100 in order for facilitating a user to realize the life percentage of the electronic device 100. For example, the electronic device 100 is applied to a point-of-sale (POS) system. In the system of the present invention, the intelligent device 200 is installed in the electronic device 100 for storing a history data "a" of the electronic device 100. According to the history data a, the intelligent device 200 generates a life percentage value. According to the life percentage value, the processing unit 220 generates a life percentage status signal b and transmits the life percentage status signal b to the prompt displaying module 240. Through the prompt displaying module 240, the user can realize the life percentage of the electronic device 100. In an embodiment, the history data a contains a product serial number, a maintenance record, an operating temperature, a usage time and at least one setting parameter of the electronic device 100. The operating temperature is the temperature of the electronic device in a working mode. The usage time is determined according to the type of the electronic device, including a host, a monitor, a printer, a hard disk drive or a peripheral device. For example, in case that the electronic device is a monitor, the usage time is the time length that the monitor is used to display images. In case that the electronic device is a host, the usage time is the time length that the host is powered on. In case that the electronic device is a hard disk drive, the usage time of the hard disk drive is the power-on time length of the hard disk drive. The setting parameter is also determined according to the type of the electronic device. For example, the setting parameter of the hard disk drive includes the number of times the hard disk drive is accessed; and the setting parameter of the monitor includes the number of times the monitor is touched or a brightness value of the monitor.

Moreover, the intelligent device 200 and the mobile device 300 are in communication with each other through a wireless Bluetooth connection, a wireless mesh network connection or a wireless WiFi network connection. Moreover, an application program 311 is installed in the mobile device 300. When the application program 311 is executed, the life percentage of the electronic device 100 is displayed on a display screen 310 of the mobile device 300.

The operating principles of the system for displaying and prompting the life percentage of the electronic device will be illustrated in more details as follows. Please refer to FIGS. 1 and 2 again. In this embodiment, the first power providing unit 110 of the electronic device 100 is a power supply for providing electricity to the electronic device 100 exclusively. The intelligent device 200 is installed in the electronic device 100. In addition, the prompt displaying module 240 of the intelligent device 200 is exposed outside the electronic device 100. Consequently, the user can realize the life percentage of the electronic device 100.

In an embodiment, the history data a of the electronic device 100 is stored in the storage module 230 of the intelligent device 200 at preset time (e.g., at the end of the business hour every day). Alternatively, after the history data a of the electronic device 100 is updated, the history data a stored in the storage module 230 of the intelligent device 200 is updated immediately. The history data a is associated with the statuses of various modules of the electronic device 100. For example, these modules include a power supply system, a motherboard, a monitor, a printer, a hard disk drive and other peripheral devices. In this embodiment, the intelligent device 200 further comprises the second power providing unit 250, which is separated from the first power providing unit 110. The second power providing unit 250 is used for providing electricity to the intelligent device 200 continuously.

The process of receiving the history data a by the intelligent device 200 will be illustrated as follows. Firstly, the history data "a" from the electronic device 100 is received by the signal transmission module 210 of the intelligent device 200. Then, the processing unit 220 generates a life percentage value according to the history data a. The life percentage value can be obtained by using specified parameters and specified mathematic formulae. In case that the types of modules included in different electronic devices are different, the corresponding life percentage values are generated according to different parameters and different mathematic formulae. The processing unit 220 updates the life percentage value of the electronic device 100 according to the newest history data a at regular time or at preset time that is set by the user, and generates the life percentage status signal b according to the life percentage value. Moreover, according to the life percentage status signal b, the prompt displaying module 240 prompts the user about the current life percentage of the electronic device 100.

Please refer to FIGS. 1 and 2 again. Preferably but not exclusively, the electronic device 100 is a monitor. Moreover, the intelligent device 200 is installed in the electronic device 100, and the prompt displaying module 240 is exposed to a surface of the electronic device 100 to be viewed by the user. In an embodiment, the prompt displaying module 240 comprises plural light emitting diodes 241, for example five light emitting diodes. The intelligent device 200 receives the history data a of the monitor at regular time. For example, the history data of the monitor contains a maintenance record, an operating temperature, a usage time, a brightness value of the monitor and/or a number of times the monitor is touched. The history data a is stored in the storage module 230. The processing unit 220 uses a specified mathematic formula to calculate the life percentage value of the monitor according to the maintenance record, the operating temperature, the usage time, the brightness value of the monitor and/or the number of times the monitor is touched. Moreover, the processing unit 220 generates the life percentage status signal b according to the life percentage value.

The life percentage is associated with the equivalent usage time of the monitor. In an embodiment, one or more light emitting diodes 241 of the prompt displaying module 240 are turned on to indicate the current life percentage shown on the monitor according to the spent equivalent usage time corresponding to the life percentage status signal b. For example, in case that the spent equivalent usage time of the monitor calculated by the processing unit 220 is 60%, three light emitting diodes 241 of the prompt displaying module 240 are turned on to prompt the user that the current life percentage is 60%. In some embodiments, the residual equivalent usage time of the monitor is also shown on the prompt displaying module 240. For example, in case that the residual equivalent usage time of the monitor calculated by the processing unit 220 is 40%, two light emitting diodes 241 of the prompt displaying module 240 are turned on to prompt the user that the residual life percentage is 40% (not shown). In some other embodiments, the prompt displaying module 240 comprises three light emitting diodes 241 for generating different color lights, for example a red light, an orange light and a green light. In case that the processing unit 220 judges that the residual life percentage of the monitor is higher than 80%, the life percentage status signal b from the processing unit 220 will trigger the prompt displaying module 240 to turn on the green light emitting diode 241. In case that the processing unit 220 judges that the residual life percentage of the monitor is lower than 20%, the orange light emitting diode 241 of the prompt displaying module 240 is turned on according to the updated life percentage status signal b. In case that the processing unit 220 judges that the residual life percentage of the monitor is lower than 10%, the life percentage status signal b from the processing unit 220 will trigger the prompt displaying module 240 to turn on the red light emitting diode 241. The red light outputted from the red light emitting diode 241 prompts the user to prepare for replacing the monitor with a new one. Consequently, the user can realize the life percentage of the electronic device 100 through the prompt displaying module 240, and prepare the replacement of the electronic device 100 according to the number of on-state light emitting diodes or the light color of the light emitting diode. Under this circumstance, the possibility of interrupting the normal operation of the electronic device 100 will be minimized.

It is noted that the example of the prompt displaying module 240 is not restricted to the light emitting diode. For example, in some embodiments, the prompt displaying module 240 is a thin film transistor liquid crystal display (TFT LCD) or a liquid crystal display module (LCM).

In the above embodiment, the intelligent device is installed in a monitor. In practical applications, the intelligent device of the present invention can be installed in an electronic system with plural electronic devices (e.g., a POS system), wherein the electronic devices or modules of the electronic system include a power supply system, a motherboard, a monitor, a printer, a hard disk drive and other peripheral devices. Consequently, the user can clearly realize the life percentage of each module of the system. Subsequently, the modules of the system can be maintained and replaced by the user more easily.

As mentioned above, the prompt displaying module 240 is used for displaying the life percentage status signal. Moreover, the system of the present invention further comprises the mobile device 300 with the display screen 310. The display screen 310 can display the life percentage of the electronic device 100. For example, the mobile device 300 is a smart phone, a tablet computer or a notebook computer. An application program (APP) 311 is executed in mobile device 300. For example, two intelligent devices 200 are respectively installed in a hard disk drive and a power supply of an electronic system. In response to the user's operation, the application program 311 of the mobile device 300 is executed to generate a read signal to the hard disk drive and the power supply. After the hard disk drive and the power supply receive the read signal, the respective life percentage status signals b are transmitted from the hard disk drive and the power supply to the mobile device 300. Consequently, the life percentages of the hard disk drive and the power supply shown on the user operation interface of the display screen 310 can be realized by the user.

From the above descriptions, the present invention provides a system for displaying and prompting a life percentage of an electronic device. An intelligent device is used for reading a history data of the electronic device and calculating a life percentage value corresponding to the electronic device according to the history data. Moreover, the intelligent device generates a life percentage status signal according to the life percentage value, and displays the life percentage of the electronic device through a prompt displaying module. Consequently, the life percentage of the electronic device can be realized by the user. In practice, the system is further equipped with a mobile device. When an application program in the mobile device is executed, the life percentage status signal of the corresponding electronic device is read by the mobile device at a near side. Moreover, the life percentage of the electronic device is clearly shown on a user interface.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A system for displaying and prompting a life percentage of an electronic device, the system comprising:
the electronic device(100) generating a history data(a); and
an intelligent device(200) installed in the electronic device(100), and comprising:
a signal transmission module(210) electrically connected with the electronic device(100), and receiving the history data(a);
a processing unit(220) generating a life percentage value according to the history data(a) of the electronic device(100), and generating a life percentage status signal(b) according to the life percentage value;
a storage module(230) storing the history data(a); and
a prompt displaying module(240) receiving and displaying the life percentage status signal(b),
**characterized in that** a user judges whether the electronic device(100) is replaced with a new one according to the life percentage status signal(b).

2. The system according to claim 1, **characterized in that** the history data(a) contains a product serial number, a maintenance record, an operating temperature, a usage time and at least one setting parameter of the electronic device(100).

3. The system according to claim 2, **characterized in that** the life percentage value is an equivalent usage time that is calculated according to at least a portion of the history data(a) of the electronic device(100), wherein the processing unit(220) generates the life percentage status signal(b) according to the equivalent usage time.

4. The system according to claim 1, **characterized in that** the electronic device(100) is a host, a monitor, a printer, a hard disk drive or a peripheral device of a point-of-sale system.

5. The system according to claim 1, **characterized in that** the history data(a) is actively read and stored by the intelligent device(200) at regular time.

6. The system according to claim 1, **characterized in that** after the history data(a) of the electronic device(100) is updated, the history data(a) in the storage module(230) is immediately updated by the processing unit(220) of the intelligent device(200).

7. The system according to claim 1, **characterized in that** the intelligent device(200) further comprises a wireless transmission module, and the wireless transmission module is in wireless connection with a mobile device(300), wherein when a read signal from the mobile device(300) is received by the intelligent device(200), the life percentage status signal(b) is transmitted from the intelligent device(200) to the mobile device(300) through the wireless transmission module, so that the life percentage of the electronic device(100) is shown on the mobile device(300).

8. The system according to claim 7, **characterized in that** the wireless transmission module is in wireless connection with the mobile device(300) through a wireless Bluetooth connection, a wireless mesh network connection or a wireless WiFi network connection.

9. The system according to claim 1, **characterized in that** the prompt displaying module(240) includes at least one light emitting diode(241), a thin film transistor liquid crystal display or a liquid crystal display module.

10. The system according to claim 1, **characterized in that** the prompt displaying module(240) includes plural light emitting diodes(241), wherein a specified number of the plural light emitting diodes(241) are turned on according to a spent equivalent usage time corresponding to the life percentage status signal(b) or a residual equivalent usage time corresponding to the life percentage status signal(b).

11. The system according to claim 1, **characterized in that** the prompt displaying module(240) includes plural light emitting diodes(241) with different colors, and the plural light emitting diodes(241) are selectively turned on according to the life percentage status signal(b).

12. The system according to claim 1, **characterized in that** the electronic device(100) comprises a first power providing unit(110) that provides electricity to the electronic device(100), and the intelligent device(200) further comprises a second power providing unit(250) that provides electricity to the intelligent device(200), wherein the first power providing unit(110) and the second power providing unit(250) are independent from each other.

13. The system according to claim 7, **characterized in that** the mobile device(300) is a smart phone, a tablet computer or a notebook computer.
